# EUROPÄISCHE PATENTANMELDUNG

(11) **EP 0 810 801 A2**
(43) Veröffentlichungstag der Anmeldung: **03.12.1997**
(21) Anmeldenummer: 97401192.6
(22) Anmeldetag: 29.05.1997
(51) Int. Cl.: H04Q 3/62

(54) **Verfahren zum Aufbau einer Verbindung sowie Vermittlungsstelle, Dienstrechner und Kommunikationsnetz**

(30) Priorität: 30.05.1996 DE 19621718
(71) Anmelder: ALCATEL ALSTHOM COMPAGNIE GENERALE D'ELECTRICITE, 75008 Paris (FR)
(72) Erfinder: Orlamünder, Harald, 71254 Ditzingen (DE); Stahl, Uwe, 71229 Leonberg (DE)
(74) Vertreter: Zinsinger, Norbert

(57) **Zusammenfassung**

Die Erfindung betrifft ein Verbindungsaufbauverfahren, eine Vermittlungsstelle und einen Dienstrechner zur Durchführung dieses Verfahrens sowie ein Kommunikationsnetz, in dem Verbindungen gemäß diesem Verfahren aufgebaut werden. Ein anforderndes Endgerät signalisiert eine Verbindungsanforderung (CALL) an eine Steuereinheit eines ersten Kommunikationsnetzes. Die Steuereinheit ermittelt sodann, ob ausreichend freie Kapazität zum Aufbau der durch die Verbindungsanforderung angeforderten Verbindung in dem ersten Kommunikationsnetz vorhanden ist. Im Falle nicht ausreichender Kapazität wird von der Steuereinheit eine Überlast-Nachricht (DAT) an das anfordernde Endgerät gesendet. Erst beim Empfang einer vom anfordernden Endgerät gesendeten Bestätigungs-Nachricht (ACK) wird sodann ein alternativer Aufbau der angeforderten Verbindung über ein anderes, zweites Kommunikationsnetz veranlaßt.

## Beschreibung

Die Erfindung betrifft ein Verfahren zum Aufbau einer Verbindung nach dem Oberbegriff von Anspruch 1, eine Vermittlungsstelle eines Kommunikationsnetzes nach dem Oberbegriff von Anspruch 6, einen Dienstrechner für ein oder für mehrere Kommunikationsnetze nach dem Oberbegriff von Anspruch 7 und ein Kommunikationsnetz nach dem Oberbegriff von Anspruch 9.

Strategien für den Aufbau von Verbindungen in einer Überlastsituation eines Kommunikationsnetzes sind vor allem aus dem Bereich der privaten Kommunikationsnetze bekannt.

Die Erfindung geht nun von einem üblichen gattungsgemäßen Verbindungsaufbauverfahren aus, wie es in privaten Nebenstellen-Netzen, beispielsweise Firmennetzen, verwendet wird, die über mehrere Netzzugänge zu einem öffentlichen Fernsprechnetz verfügen. Dieses Verfahren ist beispielsweise in dem Artikel "Vernetzte TK-Anlagen ohne Grenzen" von Hilmar Dehlen, ntz , Bd. 45 (1992) Heft 9 auf den Seiten 714 bis 720 beschrieben.

Das private Kommunikationsnetz wird von mehreren über Querleitungs-Bündel vermaschten Nebenstellen-Vermittlungseinrichtungen gebildet. Die einzelnen Nebenstellen-Vermittlungseinrichtungen verfügen jeweils über einen Netzzugang zu dem öffentlichen Fernsprechnetz. Erhält nun eine Nebenstellen-Vermittlungseinrichtung eine Verbindungsanforderung, die eine Verbindung zu einem Endgerät einer anderen Nebenstellen-Vermittlungseinrichtung des privaten Netzes anfordert, und besteht ein Engpaß in dem privaten Netz zum Aufbau der angeforderten Verbindung über Wege des privaten Netzes, so erfolgt automatisch ein Überlauf in das öffentliche Fernsprechnetz, d. h. , die Verbindungsanforderung wird von der Nebenstellen-Vermittlungseinrichtung an das öffentliche Fernsprechnetz weitergeleitet und eine Verbindung zu dem angeforderten Endgerät über das öffentliche Fernsprechnetz aufgebaut.

Dieses Verbindungsaufbauverfahren hat den Nachteil, daß im Überlastfall erhebliche Kosten durch die Nutzung des öffentlichen Fernsprechnetzes entstehen und es keinerlei Möglichkeiten gibt, eine gleichmäßigere Auslastung des privaten Kommunikationsnetzes zu erreichen.

Der Erfindung liegt nun die Aufgabe zugrunde, ein Verbindungsaufbauverfahren für ein überlastetes Netz anzugeben, das eine kostenmäßige oder verkehrsmäßige Optimierung der Leitweglenkung im Überlastfall erlaubt.

Diese Aufgabe wird gelöst durch ein Verfahren zum Aufbau einer Verbindung nach der Lehre von Anspruch 1, durch eine Vermittlungsstelle nach der Lehre von Anspruch 6, durch einen Dienstrechner für ein oder für mehrere Kommunikationsnetze nach der Lehre von Anspruch 7 sowie durch ein Kommunikationsnetz nach der Lehre von Anspruch 9.

Der Erfindung liegt der Gedanke zugrunde, in einer Überlastsituation die Überlast dem anfordernden Teilnehmer zu melden und die Verbindungsanforderung erst auf eine Bestätigungs-Nachricht vom anfordernden Teilnehmers auf ein anderes Netz umzuleiten um damit die angeforderte Verbindung über das andere Netz aufzubauen. Daraus ergibt sich der Vorteil, daß eine verbindungsindividuelle Entscheidung im Überlastfall möglich wird, was zu einer Beeinflussung des Teilnehmerverhaltens im Überlastfall und damit zu einer gleichmäßigeren Netzauslastung und einer Verringerung der Kosten führt.

Sendet der anfordernde Teilnehmer keine Bestätigungs-Nachricht, so ist es vorteilhaft, eine Freigabe-Nachricht an das anfordernde Endgerät zu senden, wenn wieder ausreichend frei Kapazität im Kommunikationsnetz ermittelt wird. Dadurch ist es möglich, das Teilnehmerverhalten weiter auf eine Kostenoptimierung hin zu beeinflussen.

Die Erfindung ist hierbei nicht nur in einer Kommunikationsumgebung mit einem privaten und einem öffentlichen Fernsprechnetz einsetzbar. Sie ist vielmehr in einer beliebigen heterogenen Netzumgebung mit mehreren privaten und/oder öffentlichen Kommunikationsnetzen oder virtuellen Kommunikationsnetzen einsetzbar. Dadurch werden durch sie insbesondere Forderungen an ein Verbindungsaufbauverfahren erfüllt, die durch eine deregulierte, heterogene Kommunikationsumgebung entstehen.

Im folgenden wird die Erfindung anhand zweier Ausführungsbeispiele unter Zuhilfenahme beiliegender Zeichnungen beispielhaft erläutert.
- Fig. 1: zeigt ein Blockschaltbild einer Kommunikationsumgebung mit einem erfindungsgemäßen Kommunikationsnetz.
- Fig. 2: zeigt ein Ablaufdiagramm eines erfindungsgemäßen Verbindungsaufbauverfahrens für das Kommunikationsnetz nach Fig. 1.

In dem ersten Ausführungsbeispiel wird nun die Durchführung eines erfindungsgemäßen Verbindungsaufbauverfahrens in einem erfindungsgemäßen Kommunikationsnetz erläutert, das mit einer erfindungsgemäßen Vermittlungsstelle versehen ist.

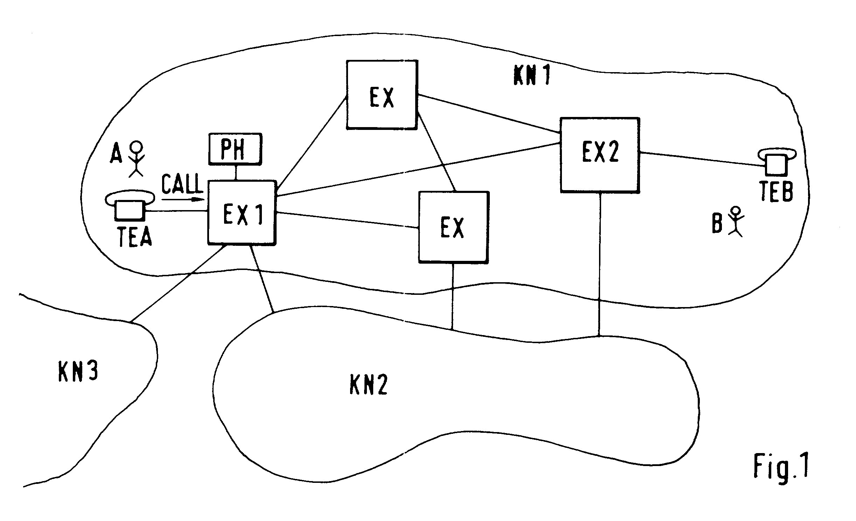

Fig. 1 zeigt drei Kommunikationsnetze KN1 bis KN2, die untereinander verbunden sind.

Die Kommunikationsnetze KN2 und KN3 sind öffentliche Kommunikationsnetze zweier unterschiedlicher Netzbetreiber. Das Kommunikationsnetz KN1 ist ein privates Kommunikationsnetz. Es ist jedoch auch möglich, daß es sich bei dem Kommunikationsnetz KN1 um ein öffentliches Kommunikationsnetz eines dritten Netzbetreibers handelt. Bei den Kommunikationsnetzen KN2 und KN3 könnte es sich auch um zwei verschiedene private Kommunikationsnetze handeln.

Das Kommunikationsnetz KN1 weist mehrere Vermittlungsstellen EX, EX1 und EX2 und zwei Endgeräte TEA und TEB auf, die einem Teilnehmer A bzw. einem Teilnehmer B zugeordnet sind. Die Endgeräte TEA und TEB sind mit den Vermittlungsstellen EX1 bzw. EX2 verbunden. Die Vermittlungsstellen EX1 und EX2 sind über mehrere Vermittlungsstellen EX miteinander verbunden. Die Vermittlungsstelle EX1 ist über Netzzugänge mit den Kommunikationsnetzen KN2 bzw. KN3 verbunden. Die Vermittlungsstelle EX2 ist mit dem Kommunikationsnetz KN3 verbunden.

Bei den Endgeräten TEA und TEB handelt es sich um übliche Fernsprechendgeräte, beispielsweise um Telefone, Faxe oder mit einem Modem oder einer entsprechenden Schnittstellenkarte versehenen Datenverarbeitungseinrichtungen. Es kann sich hierbei um analoge oder um digitale (ISDN = Integrated Services Digital Network) Endgeräte handeln.

Bei den Vermittlungseinrichtungen EX, EX1 und EX2 handelt es sich um übliche Fernsprechvermittlungsstellen, vorzugsweise um Nebenstellen-Vermittlungseinrichtungen. Diese Vermittlungseinrichtungen sind über physikalische Verbindungsleitungen des Kommunikationsnetzes KN1 oder über physikalische Verbindungsleitungen, die von einem der Kommunikationsnetze KN2 und KN3 angemietet worden sind, miteinander vermascht. Es ist auch möglich, daß es sich bei dem Kommunikationsnetz KN1 um ein virtuelles Kommunikationsnetz handelt, bei dem die Vermittlungsstellen EX, EX1 und EX2 teilweise über Wähl-Leitungen der Kommunikationsnetze KN2 und KN3 miteinander verbunden sind.

Von den Vermittlungsstellen des Kommunikationsnetzes KN1 ist die Vermittlungsstelle EX1 besonders ausgestaltet. Sie verfügt über periphere Komponenten PH, mittels denen sie Sprachansagen oder Anzeigetexte an an sie angeschlossene Endgerät (in Fig. 1 ist von diesen Endgeräten nur beispielhaft das Endgerät TEA gezeigt) senden kann. Wird von der Vermittlungsstelle EX1 bei der Durchführung des Verbindungsaufbaus einer Internverbindung im Kommunikationsnetz KN1 eine Überlastsituation festgestellt, so meldet sie die Überlastsituation mittels dieser peripheren Komponenten dem anfordernden Teilnehmer. Erst auf eine Bestätigungs-Nachricht vom anfordernden Teilnehmer wird sodann eine Verbindung über einen Alternativweg des Kommunikationsnetzes KN2 aufgebaut.

Es ist hierbei vorteilhaft, daß die Vermittlungsstelle EX1 den Verbindungsaufbau im Überlastfall für angeforderte Verbindungen steuert, die zwischen einem der an sie angeschlossenen Endgerät und einem anderen Endgerät des Kommunikationsnetzes KN1 aufzubauen sind. Es ist jedoch auch möglich, daß die Vermittlungsstelle EX1 auch den Verbindungsaufbau im Überlastfall für Verbindungen steuert, die zwischen einem der an sie angeschlossenen Endgerät und einem Endgerät eines anderen Kommunikationsnetzes aufzubauen sind.

Wird eine entsprechende Verbindungsanforderung an sie weitergeleitet, so ist es auch möglich, daß die Vermittlungsstelle EX1 auch den Verbindungsaufbau für die Verbindungen zwischen beliebigen Endgeräten beliebiger Kommunikationsnetze steuert.

Um die ihr im Rahmen des erfindungsgemäßen Verbindungsaufbauverfahrens zufallenden Funktionen zu erfüllen, verfügt die Vermittlungsstelle EX1 neben den in Vermittlungsstellen üblichen Mitteln zum Empfang einer Verbindungsaufforderung über eine zusätzliche Steuereinheit, die der Ermittlung der für eine Verbindungsanforderung zur Verfügung stehenden Kapazität im Kommunikationsnetz KN1 sowie der Steuerung des Aufbaus und der Auswahl von alternativen Verbindungen dient.

Diese Steuereinheit wird von Steuerprogrammen gebildet, die zusätzlich auf der üblichen hard- und softwaremäßigen Steuerplattform der Vermittlungsstelle EX1 ablaufen. Die Gestaltung dieser Programme wird durch den unten detailliert beschriebenen Ablauf der Verbindungsaufbauverfahrens spezifiziert.

Es ist auch möglich, daß weitere oder alle Vermittlungsstellen des Kommunikationsnetzes KN1 wie die Vermittlungsstelle EX1 ausgestaltet sind.

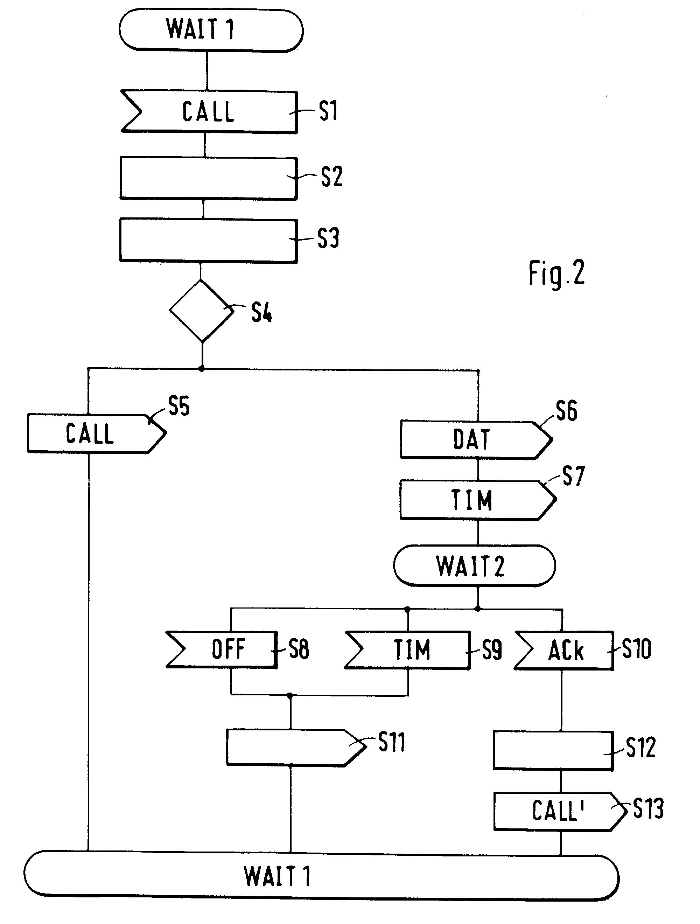

Im folgenden wird nun der detaillierte Ablauf des Verbindungsaufbauverfahrens im Überlastfall anhand von Fig. 2 erläutert.

Fig. 2 zeigt ein Ablaufdiagramm, das die Funktion der zusätzlichen Steuereinheit der Vermittlungsstelle EX1 beschreibt. Das Ablaufdiagramm weist zwei Zustände WAIT1 und WAIT2 und 13 Schritte S1 bis S13 auf.

Der Zustand WAIT1 stellt einen Wartezustand dar, in dem die Steuereinheit auf die Ankunft einer Verbindungsanforderung wartet.

Der Teilnehmer A wählt nun den Teilnehmer B an. Das ihm zugeordnete Endgerät TEA sendet daraufhin eine Verbindungsanforderung CALL an die Vermittlungsstelle EX1, die das Endgerät TEB als gerufenes Endgerät spezifiziert. Im Schritt S1 erkennt die Steuereinheit die Ankunft der Verbindungsanforderung CALL und leitet den Schritt S2 ein.

Im Schritt S2 überprüft die Steuereinheit anhand der in der Verbindungsanforderung CALL eingetragenen Rufnummer, ob eine Verbindung zu einem Endgerät des Kommunikationsnetzes KN1 oder zu einem der anderen Kommunikationsnetze KN2 und KN3 aufgebaut werden soll. Handelt es sich um eine interne Verbindungsanforderung, so wird zum Schritt S3 übergegangen.

Im Schritt S3 überprüft die Vermittlungsstelle EX1, ob ausreichend freie Kapazität im Kommunikationsnetz KN1 vorhanden ist, um die angeforderte Verbindung im Kommunikationsnetz KN1 aufzubauen. Hierfür überprüft sie den Belegungszustand von für den Aufbau der angeforderten Verbindung in Frage kommenden Querleitungsbündel. Läßt der Belegungszustand dieser Querleitungsbündel den Aufbau der angeforderten Verbindungen nicht zu, so entscheidet sich die Steuereinheit im Schritt S4, in den Schritt S6 überzugehen. Anderenfalls geht sie in den Schritt S5 über.

Es ist auch möglich, daß die Steuereinheit EX1 den vollständigen Aufbau einer Verbindung zwischen den Vermittlungsstellen EX1 und EX2 für mehrere mögliche Verbindungswege vollständig überprüft, bevor sie die Entscheidung des Schrittes S4 trifft.

Ist die Verbindungsanforderung CALL nicht an ein Endgerät des Kommunikationsnetzes KN1 gerichtet, so wird die Überprüfung des Schrittes S3 nicht durchgeführt und die Verbindungsanforderung über den entsprechenden Netzzugang an das entsprechende angeforderte Kommunikationsnetz weitergeleitet.

Im Schritt S5 wird die Verbindungsanforderung CALL über dasjenige der für die angeforderte Verbindung in Frage kommende Querleitungsbündel der Vermittlungsstelle EX1 im Kommunikationsnetz KN1 weitergeleitet, das über ausreichend freie Kapazität zum Aufbau der angeforderten Verbindung verfügt. Anschließend geht die Steuereinheit wieder in den Wartezustand WAIT1 über. Durch die Weiterleitung der Verbindungsanforderung wird im folgenden sodann die angeforderte Verbindung zwischen dem Endgerät TEA und TEB intern über Verbindungswege des Kommunikationsnetzes KN1 aufgebaut.

Im Schritt S6 wird an das Endgerät TEA eine Überlast-Nachricht DAT gesendet. Die Überlast-Nachricht (DAT) wird über einen zwischen dem Endgerät TEA und der Vermittlungsstelle EX1 aufgebauten Nutzkanal mittels der peripheren Komponenten PH als Sprachansage übertragen.

Es ist jedoch auch möglich, daß die Überlast-Nachricht DAT als Anzeigetext am Endgerät TEA angezeigt wird. Dieser Anzeigetext wird beispielsweise über den Signalisierungskanal (D-Kanal bei ISDN) oder mittels eines Modulationsverfahrens über den Nutzkanal übertragen.

Als Ansage oder Ansagetext wird dem Teilnehmer hierbei beispielsweise "Überlauf ?" oder "Gassenbesetzt" angezeigt.

Im Schritt S7 wird ein Timer TIM gestartet. Vom Schritt S7 wird sodann in den Wartezustand WAIT2 übergegangen.

Legt der Teilnehmer A auf und wird somit eine entprechende Signalisierungsnachricht OFF empfangen oder läuft die im Timer TIM gesetzte Zeit ab, so wird im Schritt S8 bzw. S9 vom Wartezustand WAIT2 in den Schritt S11 übergegangen. Wird von dem Endgerät TEA eine Bestätigungsnachricht ACK empfangen, so wird im Schritt S10 vom Wartezustand WAIT2 in den Schritt S12 übergegangen.

Bei der Bestätigungs-Nachricht ACK handelt es sich um ein vom Teilnehmer A gesprochenes Befehlswort, das über den zwischen dem Endgerät TEA und der Vermittlungsstelle EX1 aufgebauten Nutzkanal übertragen wird. Dieses Befehlswort wird mittles einer in den peripheren Komponenten integrierten Spracherkennungseinrichtung ausgewertet und an die Steuereinheit weitergeleitet.

Es ist auch möglich, daß die Bestätigungsnachricht ACK durch das Betätigen einer bestimmten Taste des Endgerätes TEA ausgelöst wird. Die Bestätigungsnachricht ACK würde so beispielsweise aus einer speziellen im Signalisierungskanal übertragenen Signalisierungsnachricht oder aus einer Signalisierungssequenz im Nutzkanal, beispielsweise einem Mehrfrequenzwahl-Ton, bestehen.

Im Schritt S11 wird die Verbindung zwischen dem Endgerät TEA und der Vermittlungsstelle EX1 ausgelöst. Die Steuereinheit geht sodann in den Warte-Zustand WAIT über.

Es ist auch möglich, daß die Steuereinheit nach dem Schritt S11 die Verbindungsanforderung CALL in eine Liste einträgt, bevor sie in den Warte-Zustand WAIT1 übergeht. In einem zweiten Prozess würde die Steuereinheit sodann in regelmäßigen Abständen für jede in diese Liste eingetragene Verbindungsanforderung überprüfen, ob genügend Kapazität für den Aufbau der angeforderten Verbindungen im Kommunikationsnetz KN2 vorhanden ist. Ist dies der Fall, so wird eine Freigabe-Nachricht an denjenigen Teilnehmer gesendet, der die entsprechende Verbindungsanforderung gesendet hat. Diese Freigabe-Nachricht wird beispielsweise mittels Sprachansage über einen aufzubauenden Nutzkanal an diesen Teilnehmer gesendet. Der Teilnehmer kann sodann einen erneuten Versuch starten, eine entsprechende Verbindung aufzubauen, indem der nochmals einen Ruf mit dieser Verbindungsanforderung an die Vermittlungsstelle EX1 signalisiert. Es ist auch möglich, daß nach dem Senden der Freigabe-Nachricht die Verbindung im Kommunikationsnetz KN1 automatisch auf das Senden einer Bestätigungs-Nachricht durch den Teilnehmer aufgebaut wird.

Im Schritt S12 wird ein alternativer Verbindungsweg über ein anderes Kommunikationsnetz KN2 oder KN3 ermittelt. Hierfür ist es insbesondere notwendig, daß die Vermittlungsstelle EX1 über entsprechende Daten über Netzzugänge des Kommunikationsnetzes NET1 und die möglichen Verbindungsnetze NET2 und NET3 zwischen diesen Netzzugängen verfügt. Entsprechend des gewählten alternativen Verbindungsweges wird die private Rufnummer des Teilnehmers B, d. h. die Rufnummer, über die der Teilnehmer B nach dem Nummerierungsplan des Kommunikationsnetzes KN1 erreichbar ist, in eine öffentliche Rufnummer des Teilnehmers B umgewertet, d. h. in eine Rufnummer, mittels der der Teilnehmer über das Kommunikationsnetz KN2 erreichbar ist.

Im Schritt S13 wird sodann ein veränderte Verbindungsanforderung CALL' mit der umgewerteten Rufnummer an das ausgewählte Kommunikationsnetz, hier das Kommunikationsnetz KN2, weitergeleitet. Im folgenden wird sodann eine alternative Verbindung zwischen den Endgerät TEA und TEB über das Kommunikationsnetz KN2 aufgebaut. Die Steuereinheit geht sodann in den Warte-Zustand WAIT1 über.

In einem zweiten Ausführungsbeispiel wird nun die Durchführung des erfindungsgemäßen Verfahrens zum Aufbau einer Verbindung in einer Überlastsituation in einem erfindungsgemäßen Kommunikationsnetz erläutert, das über einen erfindungsgemäßen Dienstrechner verfügt. Die Kommunikationsumgebung ist im zweiten Ausführungsbeispiel ebenfalls nach Fig. 1 gestaltet. Der Unterschied zum ersten Ausführungsbeispiel besteht lediglich darin, daß die zusätzliche Steuereinheit nicht in der Vermittlungsstelle EX1, sondern in einer von einem erfindungsgemäßen Dienstrechner gebildeten Dienststeuereinrichtung angesiedelt ist, die mit der Vermittlungsstelle EX1 verbunden ist. Die Vermittlungsstelle EX1 bildet hierbei eine Diestvermittlungsstelle (SSP = Service Switching Point), die mit der Dienststeuereinrichtung (SCP = Service Control Point) gemäß dem IN-Konzept (IN = Intelligent Network) kommuniziert. Es ist hierbei auch möglich, daß die Dienststeuereinrichtung auch mit weiteren Vermittlungsstellen EX und EX2 des Kommunikationsnetzes KN1 verbunden sind, die ebenfalls über eine solche Dienstvermittlungs-Funktion verfügen.

Die zusätzliche Steuereinheit der Vermittlungsstelle EX1 nach Fig. 1 und Fig. 2 ist somit in den Dienstrechner integriert und führt die Steuerung des Verbindungsaufbaus im Überlastfall für die an der Vermittlungsstelle EX1 oder für die an mehreren Vermittlungsstellen des Kommunikationsnetzes KN1 ankommenden Verbindungsanforderungen durch.

Es ist auch möglich, daß solche eine Dienststeuereinrichtung mit Vermittlungsstellen unterschiedlicher Kommunikationsnetze verbunden ist und somit das erfindungsgemäße Verbindungsaufbauverfahren zentral für mehrere Kommunikationsnetze steuert.

## Patentansprüche

1. Verfahren zum Aufbau einer Verbindung, bei dem ein anforderndes Endgerät (TEA) eine Verbindungsanforderung (CALL) an eine Steuereinheit eines ersten Kommunikationsnetzes (KN1) signalisiert und bei dem die Steuereinheit ermittelt, ob ausreichend freie Kapazität zum Aufbau der durch die Verbindungsanforderung angeforderten Verbindung in dem ersten Kommunikationsnetz (KN1) vorhanden ist,
**dadurch gekennzeichnet,** daß die Steuereinheit im Falle nicht ausreichender Kapazität eine Überlast-Nachricht (DAT) an das anfordernde Endgerät (TEA) sendet und erst beim Empfang einer vom anfordernden Endgerät (TEA) gesendeten Bestätigungs-Nachricht (ACK) einen alternativen Aufbau der angeforderten Verbindung über ein anderes, zweites Kommunikationsnetz (KN2) veranlaßt.

2. Verfahren nach Anspruch 1,
dadurch gekennzeichnet, daß die Verbindungsanforderung (CALL) von einem Endgerät (TEA) des ersten Kommunikationsnetzes (KN1) signalisiert wird.

3. Verfahren nach Anspruch 1 oder 2,
dadurch gekennzeichnet, daß die Verbindungsanforderung (CALL) den Aufbau einer Verbindung zu einem angeforderten Endgerät (TEB) des ersten Kommunikationsnetzes (KN1) anfordert.

4. Verfahren nach einem der Ansprüche 1 bis 3,
dadurch gekennzeichnet, daß im Fall nicht ausreichender Kapazität von der Steuereinheit dann eine Freigabe-Nachricht an das anfordernde Endgerät gesendet wird, wenn wieder eine ausreichend freie Kapazität im Kommunikationsnetz ermittelt wird.

5. Verfahren nach Anspruch 4,
dadurch gekennzeichnet, daß der Aufbau der angeforderten Verbindung von der Steuereinheit veranlaßt wird, wenn auf die Freigabe-Nachricht von der Steuereinheit eine von dem anfordernden Endgerät gesendete Bestätigungs-Nachricht empfangen wird.

6. Vermittlungsstelle (EX1) eines ersten Kommunikationsnetzes (KN1) mit Mitteln zum Empfang einer Verbindungsanforderung (CALL) von einem anfordernden Endgerät (TEA), mit Mitteln zum Senden und zum Empfang von Nachrichten an bzw. von dem anfordernden Endgerät (TEA) und mit einer Steuereinheit, die mit Mitteln zum Ermitteln, ob ausreichend freie Kapazität zum Aufbau der durch die Verbindungsanforderung (CALL) angeforderten Verbindung in dem ersten Kommunikationsnetz (KN1) vorhanden ist, versehen ist,
**dadurch gekennzeichnet,** daß die Steuereinheit so ausgestaltet ist, daß, wenn keine ausreichende freie Kapazität ermittelt wird, das Senden einer Überlast-Nachricht (DAT) an das anfordernde Endgerät (TEA) veranlaßt wird und daß erst beim Empfang einer von dem anfordernden Endgerät (TEA) gesendeten Bestätigungs-Nachricht (ACK) ein alternativer Aufbau der angeforderten Verbindung über ein anderes, zweites Kommunikationsnetz (KN2) veranlaßt wird.

7. Dienstrechner für ein erstes Kommunikationsnetz oder für mehrere Kommunikationsnetze mit Mitteln zum Empfang einer Verbindungsanforderung von einem anfordernden Endgerät, mit Mitteln zum Senden und zum Empfang von Nachrichten an bzw. von dem anfordernden Endgerät und mit einer Steuereinheit, die mit Mitteln zum Ermitteln, ob ausreichend freie Kapazität zum Aufbau der durch die Verbindungsanforderung angeforderten Verbindung in dem ersten Kommunikationsnetz oder in einem ersten der mehreren Kommunikationsnetze vorhanden ist, versehen ist,
**dadurch gekennzeichnet,** daß die Steuereinheit so ausgestaltet ist, daß, wenn keine ausreichende freie Kapazität ermittelt wird, das Senden einer Überlast-Nachricht an das anfordernde Endgerät veranlaßt wird und daß erst beim Empfang einer von dem anfordernden Endgerät gesendeten Bestätigungs-Nachricht ein alternativer Aufbau der angeforderten Verbindung über ein anderes, zweites Kommunikationsnetz veranlaßt wird.

8. Dienstrechner nach Anspruch 7,
dadurch gekennzeichnet, daß der Dienstrechner eine Dienststeuereinheit ist, die mit mindestens einer Dienstvermittlungsstelle des ersten Kommunikationsnetzes oder jedes der mehreren Kommunikationsnetze verbunden ist.

9. Kommunikationsnetz (KN1), das so ausgestaltet ist, daß in einer Überlastungssituation ein Verbindungsaufbau gemäß dem Verbindungsaufbauverfahren nach Anspruch 1 durchgeführt wird.
